(19) **Europäisches Patentamt / European Patent Office / Office européen des brevets**

(11) **EP 4 432 255 B1**

(12) **FASCICULE DE BREVET EUROPEEN**

(45) Date de publication et mention de la délivrance du brevet:
**05.11.2025 Bulletin 2025/45**

(51) Classification Internationale des Brevets (IPC):
***G06V 40/12*** *(2022.01)*

(21) Numéro de dépôt: **23216780.9**

(52) Classification Coopérative des Brevets (CPC):
**G06V 40/1359**

(22) Date de dépôt: **14.12.2023**

(54) **PROCÉDÉ D'ESTIMATION D'UNE DISTANCE INTER-CRÊTES SE RAPPORTANT À UNE EMPREINTE DIGITALE**

VERFAHREN ZUR SCHÄTZUNG EINES INTER-BIT-ABSTANDES IM ZUSAMMENHANG MIT EINEM FINGERABDRUCK

METHOD FOR ESTIMATING AN INTER-PEAK DISTANCE IN RESPECT OF A FINGERPRINT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **17.03.2023 FR 2302490**

(43) Date de publication de la demande:
**18.09.2024 Bulletin 2024/38**

(73) Titulaire: **IDEMIA Public Security France 92400 Courbevoie (FR)**

(72) Inventeurs:
• **VIDEAU, Victor**
  **92400 COURBEVOIE (FR)**
• **MABYALAHT, Guy**
  **92400 COURBEVOIE (FR)**

(74) Mandataire: **IPS**
**2, place Samuel de Champlain**
**92400 Courbevoie (FR)**

(56) Documents cités:
• **CHUN-XIAO REN ET AL: "Fingerprint Scaling", 15 September 2008, TOPICS IN CRYPTOLOGY - CT-RSA 2020 : THE CRYPTOGRAPHERS' TRACK AT THE RSA CONFERENCE 2020, SAN FRANCISCO, CA, USA, FEBRUARY 24-28, 2020, CORNELL UNIVERSITY LIBRARY, 201 OLIN LIBRARY CORNELL UNIVERSITY ITHACA, NY 14853, PAGE(S) 474 - 481, XP019105656**
• **REN CHUNXIAO ET AL: "A Framework of Fingerprint Scaling", vol. 11, no. 3, 1 March 2013 (2013-03-01), pages 1547 - 1559, XP093081443, ISSN: 2302-4046, Retrieved from the Internet <URL:http://journal.esperg.com/index.php/tijee/article/viewFile/2124/2610> [retrieved on 20230912], DOI: 10.11591/telkomnika.v11i3.2304**

## Description

### DOMAINE DE L'INVENTION

La présente invention se rapporte au domaine des traitements appliqués à des images montrant des empreintes digitales.

### ETAT DE LA TECHNIQUE

Il est connu des procédés pour identifier ou authentifier un individu à l'aide de ses empreintes digitales, ces procédés comprenant les étapes suivantes. De façon conventionnelle, on acquiert une image d'épreuve montrant une empreinte digitale d'épreuve d'un individu, et cette image est comparée avec une image de référence montrant une empreinte digitale de référence, de sorte à vérifier une correspondance entre l'empreinte digitale d'épreuve et l'empreinte digitale de référence. Si une telle correspondance est trouvée, alors il est considéré que l'individu a préalablement été enrôlé.

Un exemple d'art antérieure est le document Chun-Xiao Ren et al.: "Fingerprint Scaling", 15 septembre 2008 (2008-09-15), Tapies in Cryptology- CT-RSA 2020 : The Cryptographers Track at the RSA Conference 2020, San Francisco, CA, USA, February 24-28, 2020, Cornell University Library, Ithaca, NY 14853, pages 474 - 481, XP019105656.

Certains de ces procédés comprennent l'estimation d'une distance inter-crêtes (« inter-ridge distance » en anglais) se rapportant à l'empreinte digitale d'épreuve. Pour rappel, une distance inter-crêtes est une distance qui sépare deux crêtes d'une empreinte digitale. Dans ces procédés, la distance inter-crêtes est estimée à partir de l'image d'épreuve et en tenant compte de la résolution de l'image d'épreuve (généralement exprimée en pixels par pouce, abrégé en dpi).

Or, une telle distance inter-crêtes peut être estimée de manière imprécise avec ces procédés, surtout lorsque l'image d'épreuve comprend un signal parasite. Par exemple, dans un contexte d'enquête policière, il est possible d'utiliser comme image d'épreuve une photographie d'une empreinte digitale laissée sur un support, cette photographie étant acquise par un appareil générique, c'est-à-dire un dispositif non spécifiquement dédié à l'acquisition d'empreintes digitales. Une empreinte digitale apparaissant dans une image de ce type est communément appelée empreinte digitale « latente ». Le support sur lequel l'empreinte latente a été laissée peut présenter des motifs parasites susceptibles de compromettre la précision de l'estimation réalisées par les procédés susmentionnés.

### EXPOSE DE L'INVENTION

Un but de l'invention est d'estimer une distance inter-crêtes dans une image montrant une empreinte digitale de manière précise même dans le cas où l'image comprend un signal parasite.

Ce but est atteint par un procédé de traitement d'une image d'épreuve montrant une empreinte digitale d'épreuve, le procédé comprenant les étapes suivantes mises en œuvre par ordinateur : génération d'une carte de classification issue de l'image d'épreuve, la carte de classification comprenant, pour chaque bloc faisant partie d'une pluralité de blocs de l'image d'épreuve et pour chaque classe d'une pluralité de classes de distances en pixels, un score associé au bloc et à la classe, le score associé au bloc et à la classe étant indicatif d'une probabilité d'existence dans l'image d'épreuve d'un segment passant par le bloc et dont la longueur en pixels constitue une distance inter-crêtes de l'empreinte digitale incluse dans la classe ; génération d'une carte de distances inter-crêtes locales à partir de la carte de classification, la carte de distances inter-crêtes locales comprenant, pour chaque bloc de la pluralité de blocs, une distance inter-crêtes locale en pixels estimée pour le bloc ; estimation d'une distance inter-crêtes moyenne en pixels de l'empreinte digitale d'épreuve à partir de la carte de distances inter-crêtes locales et d'une classe d'intérêt faisant partie de la pluralité de classes de distance en pixels, l'estimation comprenant une sélection, dans la carte de distances inter-crêtes locales, de distances inter-crêtes locales d'intérêt selon un critère de proximité avec la classe d'intérêt, et un calcul d'une moyenne entre les distances inter-crêtes locales d'intérêt.

Le procédé peut également comprendre les caractéristiques suivantes, prises seules ou combinées entre elles à chaque fois que cela fait sens techniquement.

De préférence, la distance inter-crêtes locale en pixels estimée pour un bloc est calculée à partir des données suivantes : un premier score indicatif d'une probabilité d'existence maximale parmi les scores associés au bloc, le premier score étant associé à une première classe faisant partie de la pluralité de classes de distances, et une première valeur de distance en pixels incluse dans la première classe.

De préférence, la distance inter-crêtes locale en pixels estimée pour un bloc est calculée à partir des données suivantes : un deuxième score associé à une deuxième classe, la deuxième classe étant adjacente à la première classe dans la pluralité de classes de distances en pixels, et une deuxième valeur de distance en pixels incluse dans la deuxième classe.

De préférence, la distance inter-crêtes locale en pixels estimée pour un bloc est calculée à partir des données suivantes : un troisième score associé à une troisième classe, la troisième classe étant adjacente à la première classe dans la pluralité de classes de distances en pixels, et la troisième classe étant distincte de la deuxième classe, et une troisième valeur de distance en pixels incluse dans la troisième classe.

De préférence, la distance inter-crêtes locale en pixels estimée pour un bloc est calculée comme une moyenne de la première valeur de distance, de la deuxième valeur de distance et de la troisième valeur de distance, respectivement pondérées par le premier score, le deuxième score et le troisième score.

De préférence, le procédé comprend en outre des étapes de : génération d'une carte de classification préliminaire issue de l'image d'épreuve, la carte de classification préliminaire comprenant, pour chaque bloc d'un ensemble de blocs couvrant toute l'image d'épreuve et pour chaque classe de la pluralité de classes de distances en pixels, un score préliminaire associé au bloc et à la classe, le score préliminaire associé au bloc et à la classe étant indicatif d'une probabilité d'existence dans l'image d'épreuve d'un segment passant par le bloc et dont la longueur en pixels constitue une distance inter-crêtes de l'empreinte digitale incluse dans la classe ; à partir de l'image d'épreuve, génération d'un masque binaire estimant, pour chaque bloc de l'ensemble de blocs, si le bloc montre ou non une empreinte digitale ; application du masque binaire à la carte de classification préliminaire de sorte à générer la carte de classification, la pluralité de blocs étant restreinte à chaque bloc que le masque binaire estime montrer une empreinte digitale.

De préférence, la génération de la carte de classification préliminaire est mise en œuvre par un premier réseau de neurones, et la génération du masque binaire est mise en œuvre par un deuxième réseau de neurones fonctionnant en parallèle du premier réseau de neurones.

De préférence, l'application du masque binaire à la carte de classification préliminaire comprend un produit de Hadamard entre la carte de classification préliminaire et le masque binaire.

De préférence, le procédé comprend en outre une extraction de caractéristiques de l'image d'épreuve par un réseau de neurones dépourvu de couche de normalisation, la carte de classification étant issue des caractéristiques extraites.

De préférence, les distances inter-crêtes locales d'intérêt sélectionnées selon le critère de proximité avec la classe d'intérêt sont des distances inter-crêtes locales comprises dans un intervalle ayant des bornes déterminées à partir d'une valeur de distance incluse dans la classe de référence, l'intervalle formant un voisinage autour de la valeur de distance.

De préférence, le procédé comprend des étapes de : calcul d'un histogramme à partir de la carte de classification, l'histogramme comprenant, pour chaque classe faisant partie de la pluralité de classes de distances en pixels, un score agrégé obtenu par agrégation des scores associés à la classe ; et détection d'au moins un maximum local de l'histogramme, la classe d'intérêt étant associée à un maximum local détecté dans l'histogramme.

De préférence, il est détecté dans l'histogramme une pluralité de maximas locaux, chaque maximum local étant associé à une classe d'intérêt faisant partie de la pluralité de classes de distances en pixels, et l'étape d'estimation est mise en œuvre pour chaque classe d'intérêt, de sorte à produire une pluralité de distance inter-crêtes moyenne en pixels.

De préférence, le procédé comprend en outre des étapes de : obtention d'une distance inter-crêtes de référence en pixels se rapportant à une empreinte digitale de référence montrée dans une image de référence ; redimensionnement de l'image d'épreuve en une image d'épreuve redimensionnée de sorte que la distance inter-crêtes moyenne en pixels corresponde à la distance inter-crêtes de référence ; commande de comparaison entre l'image d'épreuve redimensionnée et l'image de référence, de sorte à vérifier une correspondance entre l'empreinte digitale d'épreuve et l'empreinte digitale de référence.

De préférence, la pluralité de maxima locaux comprend un maximum local principal et un maximum local secondaire inférieur au maximum local principal ; la pluralité de distances inter-crêtes moyennes en pixels comprend une distance principale calculée à partir du maximum local principale et une distance secondaire calculée à partir du maximum local secondaire, et le procédé comprenant en outre : une première mise en œuvre des étapes de redimensionnement et de commande de comparaison à partir de la distance principale, et après la première mise en œuvre, une deuxième mise en œuvre des étapes de redimensionnement et de commande de comparaison à partir de la distance secondaire en lieu et place de la distance principale, de préférence à condition que la première mise en œuvre ait abouti à un résultat indiquant l'empreinte digitale d'épreuve et l'empreinte digitale de référence ne correspondant pas.

De préférence, chaque bloc est un pixel de l'image.

De préférence, la pluralité de classe de distances respecte la règle suivante : plus une classe de la pluralité de classes de distances a une valeur médiane élevée, plus la classe a une taille élevée.

Il est également proposé un produit programme d'ordinateur comprenant des instructions de code de programme pour l'exécution des étapes du procédé qui précède, lorsque ce programme est exécuté par un ordinateur.

Il est en outre proposé une mémoire lisible par ordinateur stockant des instructions exécutables par l'ordinateur pour l'exécution des étapes du procédé qui précède.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 illustre de façon schématique un dispositif de traitement d'image selon un mode de réalisation.

La figure 2 est un organigramme d'étapes d'un procédé de traitement d'image selon un mode de réalisation.

La figure 3 comprend deux images : à gauche, une image montrant une empreinte digitale latente, et à droite, une représentation visuelle d'une carte de distances inter-crêtes locales produite par application du procédé de la figure 2 à l'image de gauche.

La figure 4 est une portion d'image annotée de façon à monter une distance inter-crête.

La figure 5 comprend deux images : à gauche, une autre image montrant une empreinte digitale latente, et à droite, un histogramme issu de l'image de gauche.

La figure 6a montre une série de résultats obtenus en appliquant à des images un procédé utilisant un réseau de neurones comprenant des couches de normalisation.

La figure 6b montre une série de résultats obtenus en appliquant à des images un procédé utilisant un réseau de neurones dépourvu de couche de normalisation.

Sur l'ensemble des figures, les éléments similaires portent des références identiques.

## DESCRIPTION DETAILLEE DE L'INVENTION

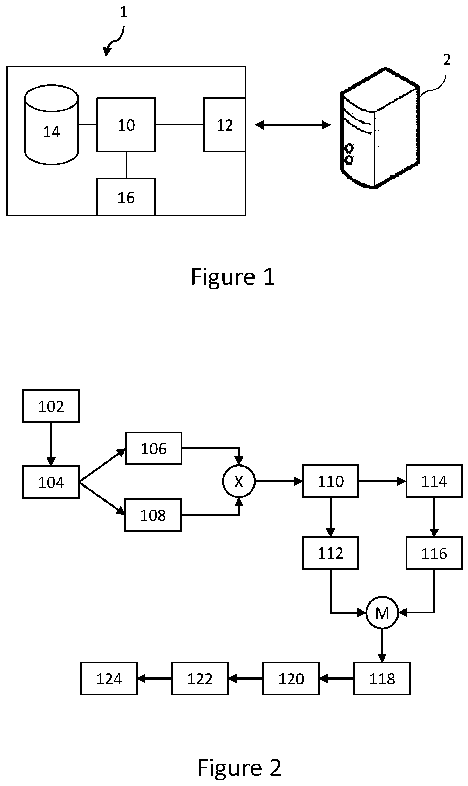

En référence à la figure 1, un dispositif 1 de traitement d'images comprend un processeur 10, une interface de communication 12 et une mémoire 14.

Le processeur 10 est configuré pour mettre en œuvre certaines étapes d'un procédé de traitement d'image qui sera décrit plus loin. Le processeur 10 peut avoir n'importe quelle structure. Le processeur comprend un ou plusieurs cœurs, chaque cœur étant configuré pour exécuter les instructions de code d'un programme de manière à mettre en œuvre les étapes précitées. On verra par la suite que ce programme utilise des réseaux de neurones.

L'interface de communication 12 est adaptée pour permettre au dispositif 1 de traitement d'images de recevoir des images à traiter et de communiquer avec un serveur 2. L'interface de communication 12 est de type quelconque. Elle est par exemple filaire (Ethernet) ou de type radio sans fil moyennant un protocole de communication quelconque (Wi-Fi, Bluetooth, etc.).

La mémoire 14 est adaptée pour mémoriser des données manipulées ou produites par le processeur 10. La mémoire 14 est de type quelconque. Conventionnellement, la mémoire 14 comprend une mémoire volatile pour stocker des données temporairement, et une mémoire non-volatile pour stocker des données de manière persistante, c'est-à-dire d'une manière qui conserve les données lors d'une mise hors tension de la mémoire non volatile.

La mémoire 14 est en particulier adaptée pour stocker une image reçue par le dispositif 1 de traitement, et destinée à être traitée par le processeur.

Le dispositif 1 de traitement d'images peut également comprendre un capteur d'images 16 montrant des empreintes digitales. Le capteur peut éventuellement comprendre une surface transparente servant de support pour un doigt, de sorte à stabiliser le doigt et ainsi montrer de manière bien visible une empreinte digitale du doigt dans une image fournie par le capteur.

Le serveur 2 stocke une base de données comprenant des images de référence montrant des empreintes digitales de référence se rapportant à des individus de référence préalablement enrôlés.

Classes de distances en pixels

Comme on le verra par la suite, le dispositif 1 de traitement, et plus particulièrement le processeur 10, est configuré pour mettre en œuvre des traitements se fondant sur une pluralité de N classes de distances en pixels prédéfinies.

Chacune des N classes inclut un ensemble de valeurs de distance en pixels qui lui est propre, cet ensemble de valeurs étant défini à l'avance.

Comme indiqué ci-dessus, les distances sont exprimées en pixels, et non dans une unité de longueur (tel que le pouce ou le mètre) ou dans une unité dépendant d'unité de longueur (comme c'est le cas d'une résolution, généralement exprimée en pixels/pouce, abrégé en dpi). Dans le présent texte, on part du principe qu'une distance en pixel peut être une valeur décimale, et n'est donc pas forcément une valeur entière.

Chaque classe a une taille qui caractérise la quantité de valeurs de distance en pixels incluses dans la classe. Par ailleurs, chaque classe a une valeur médiane de distance en pixels.

Au sein de la pluralité de N classes, les classes sont ordonnées d'après leurs valeurs médianes respectives. Ainsi, la pluralité de N classes comprend deux classes extrémales, et éventuellement N-2 classes intermédiaires si N>2. Chaque classe intermédiaire a deux classes qui lui sont adjacentes au sein de la pluralité de N classes. En revanche, chaque classe extrémale a une seule classe qui lui est adjacente.

Par convention, on attribue aux classes des indices respectifs allant de 1 à N, par ordre de valeur médiane. Ainsi, une classe intermédiaire d'indice i est adjacente aux classes d'indices i-1 et i+1.

De préférence, les classes sont contiguës, dans le sens où pour tout i allant de 1 à N-1 la borne supérieure de la classe d'indice i est égale à la borne inférieure de la classe d'indice i+1. De la sorte, les intervalles respectifs des classes mis bout à bout couvrent un intervalle continu, sans redondance forte (si l'on excepte les bornes dans le cas où les intervalles sont fermés).

De préférence, la pluralité de N classes respecte la règle suivante : plus une classe a une valeur médiane élevée, plus la classe a une taille élevée. Autrement dit, pour tout i allant de 1 à N-1, la classe d'indice i+1 a une taille supérieure à la taille de la classe d'indice i. On verra dans la suite que cette caractéristique est avantageuse.

Dans un mode de réalisation non limitatif, chaque classe de distance en pixels est un intervalle de valeurs de distance en pixels. Cet intervalle comprend une borne inférieure (valeur minimale de distance en pixels) et une borne supérieure (valeur maximale de distance en pixels). Dans ce mode de réalisation, la taille d'une classe est la longueur de l'intervalle (de la borne inférieure à la borne supérieure). Par ailleurs, la valeur médiane de la classe est, dans ce mode de réalisation, la valeur centrale de l'intervalle, c'est-à-dire une valeur se trouvant à équidistance de la borne inférieure et de la borne supérieure.

Par exemple, une pluralité de classes respectant tous les principes définis ci-dessus est détaillée dans le tableau suivant (on a N=5) :

| Indice de la classe | Valeurs incluses dans la classe (exprimées en pixels) | Taille de la classe (exprimée en pixels) |
| --- | --- | --- |
| 1 | [10, 11] | 1 |
| 2 | [11, 12.1] | 11.1 |
| 3 | [12.1, 13.31] | 1.21 |
| 4 | [13.31, 14.64] | 1.33 |
| 5 | [14.64, 16.11] | 1.47 |

Cette pluralité de 5 classes couvre un intervalle global allant de 10 à 16.11 pixels. Cet intervalle fait sens, car couvre une gamme de distance inter-crêtes en pixels mesurables dans une banque d'images d'empreintes digitales ayant des résolutions variées (environ 500 dpi à environ 1000 dpi).

**Procédé de traitement d'image**

En référence à l'organigramme de la figure 2, un procédé mis en œuvre par le dispositif 1 comprend les étapes suivantes.

Dans une étape 102, le dispositif 1 de traitement reçoit une image d'épreuve montrant une empreinte digitale d'épreuve d'un individu. Ici, le qualificatif « d'épreuve » a juste vocation à établir une distinction entre l'image reçue et les images de référence stockées par le serveur.

On distingue deux types d'empreintes digitales : les empreintes digitales montrées dans des images acquises par un capteur d'image dédié (on les appelle « tenprint » en anglais), et les empreintes digitales dites « latentes » et déjà discutées en introduction.

L'image d'épreuve peut avoir été acquise par le capteur d'image (si présent) ou par un autre capteur d'image, auquel cas l'empreinte digitale d'épreuve est de type tenprint. En variante, l'image d'épreuve peut être reçue via l'interface de communication, et être latente.

L'image d'épreuve comprend une pluralité de pixels formant une grille à deux dimensions. Chaque pixel a une position spécifique dans cette grille, ainsi qu'une information lumineuse. L'information de couleur est de n'importe quel type : à une composante (niveau de gris), à trois composantes (rouge, vert, bleu par exemple), etc.

Tout ou partie des pixels de l'image d'épreuve montre l'empreinte digitale d'épreuve.

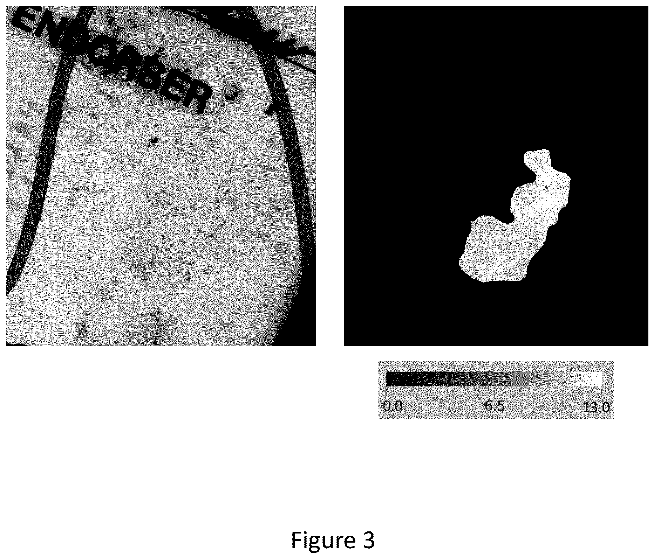

La figure 3 montre à gauche un exemple d'image d'épreuve montrant une empreinte digitale latente susceptible d'être traitée par le dispositif 1. On peut constater que l'empreinte digitale latente ne couvre par toute l'image, et même qu'elle n'est que partiellement visible.

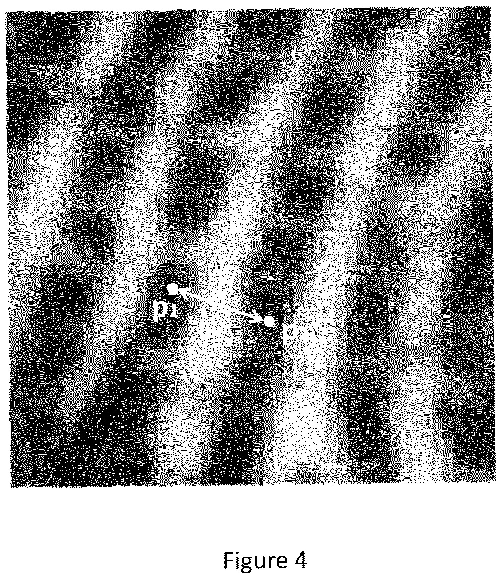

Pour rappel, une empreinte digitale est un motif dessiné par des crêtes formées sur le doigt d'un individu. Comme déjà rappelé dans l'introduction, deux crêtes adjacentes sont séparées par une distance inter-crêtes. Les distances inter-crêtes sont différentes d'une empreinte digitale à l'autre. On a représenté en figure 4 une distance inter-crêtes apparaissant dans une portion d'image zoomée. Comme on peut le voir sur cette figure, une distance inter-crêtes s'étend sur un certain nombre de pixels.

La résolution de l'image d'épreuve n'est pas connue par le dispositif 1 de traitement.

De retour à la figure 2, le processeur 10 met en œuvre les étapes suivantes à partir de l'image d'épreuve.

Dans une étape 104, le processeur extrait des caractéristiques de l'image d'épreuve au moyen d'un réseau de neurones d'extraction. Les caractéristiques extraites sont généralement appelées « cartes de caractéristiques » dans la littérature (« feature maps » en anglais).

De façon conventionnelle, un réseau de neurones comprend une succession de couches. Chaque couche comprenant des neurones prenant leurs entrées sur des neurones de la couche précédente. Il est connu des couches ayant des fonctions diverses. En particulier, de façon connue, une couche de normalisation a pour fonction de normaliser des données qu'elle prend en entrée, de sorte à limiter une dispersion dans les données de sortie du réseau de neurones.

Le réseau de neurones d'extraction peut être convolutif, auquel cas au moins une des couches du réseau de neurones est une couche de convolution.

Le réseau de neurones d'extraction a pour particularité d'être dépourvu de couche de normalisation. On verra dans la suite que cette absence de couche de normalisation constitue un avantage, contrairement à ce que l'on pourrait penser de prime abord.

Dans une étape 106, le processeur 10 génère une carte de classification préliminaire issue de l'image d'épreuve. Plus précisément, la carte de classification préliminaire est générée par le processeur 10 à l'aide d'un réseau de neurones de classification prenant en entrée les caractéristiques extraites par le réseau de neurones d'extraction, le réseau de neurones de classification ayant fait l'objet d'un entraînement préalable.

Le réseau de neurones de classification assure une fonction de classification sur les N classes de distances inter-crêtes en pixels discutées précédemment, et la carte de classification reflète le résultat de cette classification.

La carte de classification préliminaire comprend, pour chaque bloc d'un ensemble de blocs couvrant toute l'image d'épreuve et pour chaque classe faisant de la pluralité N de classes, un score préliminaire associé au bloc et à la classe.

Dans le présent texte, un « bloc » d'une image constitue une région de l'image d'un seul tenant et comprenant un ou plusieurs pixels de l'image. Dans un mode de réalisation préféré, chaque bloc considéré est en réalité un pixel de l'image d'épreuve. Dans ce cas, l'ensemble de blocs couvrant toute l'image est l'ensemble des pixels de l'image d'épreuve, si bien que le nombre de scores préliminaires est égal à N multiplié par le nombre de pixels de l'image d'épreuve.

Le score préliminaire $p_i$ associé à un bloc et à la classe d'indice i est indicatif d'une probabilité d'existence, dans l'image d'épreuve, d'un segment passant par le bloc et dont la longueur constitue une distance inter-crêtes de l'empreinte digitale incluse dans la classe d'indice i.

Dans un mode de réalisation, le score préliminaire $p_i$ associé à un bloc et la classe d'indice i est directement la probabilité d'existence telle que définie ci-dessus. Le score préliminaire $p_i$ a alors une valeur comprise entre 0 et 1. Dans ce cas, plus la valeur du score préliminaire est élevée, plus la probabilité d'existence est élevée. Toutefois, il est entendu que le score préliminaire $p_i$ peut être indicatif d'une telle probabilité d'existence, sans pour autant se présenter directement sous la forme de cette probabilité. En effet, le score préliminaire peut être une donnée à partir de laquelle une telle probabilité d'existence peut être déduite.

En définitive, on peut considérer que l'opération réalisée par le réseau de neurones de classification est de partitionner l'image d'épreuve en blocs, et d'assigner à chaque bloc une distribution discrète de N scores $p_1, ..., p_N$ respectivement associés aux classes d'indices allant de 1 à N. Ces scores $p_i$ indiquent quelles sont les valeurs de distance inter-crêtes les plus probablement montrées par le bloc correspondant.

Dans la très grande majorité des images montrant une empreinte digitale, l'empreinte digitale ne couvre pas toute l'image, mais n'est visible que dans une partie de l'image (c'est notamment le cas de l'image montrée à gauche de la figure 3). Ainsi, l'empreinte digitale d'épreuve peut n'être visible que dans certains blocs de l'image d'épreuve, que l'on appelle par convention « blocs d'intérêt », tandis que les autres blocs de l'image d'épreuve ne fournissent aucune information pertinente sur l'empreinte digitale d'épreuve. En définitive, l'ensemble de blocs de départ, couvrant toute l'image, comprend une pluralité de blocs d'intérêts, cette pluralité de blocs d'intérêt formant un sous-ensemble de l'ensemble de blocs de départ.

Pour tenir compte de cet aspect, le processeur 10 génère dans une étape 108 un masque binaire estimant, pour chaque bloc de l'ensemble de blocs, si le bloc est un bloc d'intérêt (c'est-à-dire un bloc montrant une empreinte digitale) ou non (c'est-à-dire un bloc ne montrant pas d'empreinte digitale).

Le masque binaire est généré par un réseau de neurones de segmentation sémantique prenant en entrée les caractéristiques extraites par le réseau de neurones d'extraction, le réseau de neurones de segmentation sémantique ayant fait l'objet d'un entraînement préalable. Le réseau de neurones de segmentation sémantique fonctionne en parallèle du réseau de neurones de classification.

Par exemple, le masque binaire assigne la valeur 1 à chaque bloc d'intérêt (considéré comme montrant une empreinte digitale), et la valeur 0 aux autres blocs (considérés comme ne montrant pas d'empreinte digitale.

Pour assigner une valeur 0 ou 1, le réseau de neurones de segmentation sémantique peut mettre en œuvre les sous-étapes suivantes.

Dans une première sous-étape, le réseau de neurones de segmentation génère une carte de segmentation à partir des caractéristiques précédemment extraites de l'image d'épreuve. La carte de segmentation comprend, pour chaque bloc, une probabilité que le bloc montre une empreinte digitale. Cette probabilité a une valeur comprise entre 0 et 1.

Dans une deuxième-sous étape, le réseau de neurones de segmentation détermine un seuil à appliquer à la carte de segmentation. De préférence, le seuil est égal à la probabilité maximale de la carte de segmentation multipliée par un coefficient prédéfini strictement inférieur à 1, par exemple 0.65.

Dans une troisième sous-étape, le réseau de neurones de segmentation seuille la carte de segmentation à l'aide du seuil déterminé, de sorte à produire le masque binaire. Au cours de cette sous étape, tout probabilité inférieure au seuil est mise à zéro, tandis que toute probabilité supérieure au seuil est mise à 1.

Dans une étape 110, le processeur applique le masque binaire à la carte de classification préliminaire de sorte à générer une carte de classification masquée.

Par exemple, l'application du masque binaire à la carte de classification préliminaire comprend un produit de Hadamard entre la carte de classification préliminaire et le masque binaire (ce produit étant représenté sur la figure 2 par le signe X).

La carte de classification masquée comprend, pour chaque bloc d'intérêt et pour chaque classe de la pluralité N de classes, un score associé au bloc d'intérêt et à la classe. Le score associé à un bloc et une classe est indicatif d'une probabilité d'existence dans l'image de référence d'un segment passant par le bloc et dont la longueur constitue une distance inter-crêtes de l'empreinte digitale incluse dans la classe.

On voit que la carte de classification masquée à un contenu similaire à celui de la carte de classification générée par le réseau de neurones de classification utilisé en amont.

Chaque score de la carte de classification masquée, qui est associé à un bloc d'intérêt et à une classe donnée, est issu du score préliminaire associé à ce bloc d'intérêt et à cette classe.

De préférence, chaque score de la carte de classification masquée, qui est associé à un bloc d'intérêt et à une classe donnée, est précisément le score préliminaire associé à ce bloc d'intérêt et à cette classe. Dit autrement, un score préliminaire qui est associé à un bloc d'intérêt se retrouve également en tant que score dans la carte de classification masquée, sans changement de sa valeur.

Toutefois, la carte de classification masquée est restreinte aux blocs d'intérêts.

Cette restriction peut être réalisée de plusieurs manières.

La restriction peut être réalisée de sorte que la carte de classification masquée comprenne N scores $p_1$, ..., $p_N$ seulement pour les blocs d'intérêt, c'est-à-dire les blocs qui ont été désignés par le masque binaire comme montrant une empreinte digitale. Dans ce cas, le nombre de scores contenus dans la carte de classification masquée est inférieur au nombre de scores préliminaires contenu dans la carte de classification préliminaire. Dans ce cas ne sont conservés que les scores se rapportant à des blocs d'intérêt de l'image d'épreuve (seulement le ou les blocs montrant une empreinte digitale d'après le masque binaire), et sont éliminés les scores se rapportant aux autres blocs de l'ensemble de blocs couvrant toute l'image.

En variante, la restriction aux blocs d'intérêts est réalisée en forçant la valeur de tout score se rapportant à un bloc qui n'est pas un bloc d'intérêt à une valeur indiquant que le score n'est pas pertinent, par exemple en forçant cette valeur à zéro. Dans la suite du procédé, le processeur peut ainsi reconnaître un score non pertinent, et ainsi l'ignorer.

Quelle que soit la nature de la restriction réalisée, l'application du masque binaire peut être considérée comme un filtrage de la carte de classification préliminaire permettant au processeur de réaliser par la suite des traitements bornés aux score pertinents. Ceci permet de réduire les ressources matérielles nécessaires à la mise en œuvre ultérieure des étapes ultérieures du procédé. De plus, cette restriction permet d'améliorer la précision de l'estimation fournie par le procédé en raison de l'exclusion des zones qui ne présentent pas d'intérêt.

Dans une étape 112, le processeur 10 génère une carte de distances inter-crêtes locales à partir de la carte de classification masquée.

La carte de distances inter-crêtes locales comprend, pour chaque bloc d'intérêt, une distance inter-crêtes locale en pixels estimée pour le bloc d'intérêt. Ici, le qualificatif « local » est utilisé pour illustrer le fait qu'une distance inter-crêtes locale est une information associée à un bloc ne constituant qu'une portion de l'image d'épreuve, et non une information plus globale.

Une distance inter-crêtes locale en pixels estimée pour un bloc est calculée à partir de données sélectives issues de la carte de classification masquée et de la pluralité de N classes.

Ces données sélectives comprennent un score $p_k$ indicatif d'une probabilité d'existence maximale parmi les N scores $p_1, ..., p_N$ associés au bloc considéré. Ainsi, dans le cas où le score indicatif d'une probabilité d'existence maximale est un score $p_k$ de valeur maximale, l'indice k du premier score est :

$$k = \underset{i=1,...,N}{\mathrm{argmax}}(p_i)$$

Les données sélectives comprennent par ailleurs une valeur $C_k$ incluse dans la classe d'indice k associée au score $p_k$. Par exemple, la valeur $C_k$ est la valeur médiane de la classe d'indice k.

Tenir compte des données $p_k$ et $C_k$ permet d'obtenir une distance inter-crêtes locale pertinente. **En** effet, la carte de classification masquée indique que s'il existe dans l'image d'épreuve un segment passant par le bloc considéré et dont la longueur constitue une distance inter-crête, alors l'hypothèse la plus probable est que cette longueur est incluse dans la classe d'indice k. C'est cela que reflète le score $p_k$ indicatif d'une probabilité d'existence maximale. Tenir compte de cette classe permet une estimation de distance plus précise.

Si k>1, alors les données sélectives pour calculer la distance inter-crêtes locale associée à un bloc comprennent de préférence :

- le score $p_{k-1}$ associé à la classe d'indice k-1 (qui est donc une classe adjacente à la classe d'indice k dans la pluralité de N classes),
- une valeur de distance $C_{k-1}$ incluse dans la classe d'indice k-1, telle que la valeur médiale de la classe d'indice k-1.

Si k<N, alors les données sélectives pour calculer la distance inter-crêtes locale associée à un bloc comprennent de préférence :

- le score $p_{k+1}$ associé à la classe d'indice k+1 (qui est donc une classe adjacente à la classe d'indice k dans la pluralité de classes),
- une valeur de distance $C_{k+1}$ incluse dans la classe d'indice k+1, telle que la valeur médiale de la classe d'indice k+1.

Ainsi, il est de préférence tenu compte de la ou des classes adjacente(s) à la classe d'indice k la plus pertinente, et de ne pas tenir compte d'autre classes. Ceci a pour avantage d'affiner encore plus l'estimation de la distance inter-crêtes locale.

Si 1 <k<N, alors la distance inter-crêtes locale associée au bloc considéré peut être calculée de la manière suivante :

$$\frac{p_{k-1}C_{k-1} + p_k C_k + p_{k+1}C_{k+1}}{p_{k-1} + p_k + p_{k+1}}$$

La distance inter-crêtes locale est ainsi une moyenne des distances $C_{k-1}$, $C_k$ et $C_{k-1}$ respectivement pondérées par les scores correspondants $p_{k-1}$, $p_k$ et $p_{k+1}$. Avec un tel calcul, on réalise une interpolation permettant d'obtenir en sortie des valeurs faisant partie d'un espace continu et non discret, ce qui contribue également à affiner l'estimation réalisée.

On a représenté à droite de la figure 3 un exemple de carte de distances inter-crêtes locales obtenue à partir de l'image d'épreuve à gauche de la figure 3. La partie en noir correspond aux blocs non pertinents. On voit que les blocs d'intérêt couvrent une zone spécifique de l'image. Cette zone comprend différents niveaux de gris pour illustrer le fait que les distances inter-crêtes locales estimées dans cette zone ont des valeurs différentes, avec une valeur maximale égale à 13.

Le processeur 10 sélectionne au moins une classe d'intérêt dans la pluralité de classes de distances, et ce à l'aide de la carte de classification masquée. Chaque classe d'intérêt peut être sélectionnée par le processeur 10 à l'aide d'étapes 114, 116 qui sont les suivantes.

Dans l'étape 114, le processeur 10 calcule un histogramme à partir de la carte de classification masquée. L'histogramme comprend, pour chacune des N classes de distance en pixels, un score agrégé obtenu par agrégation des scores associés à la classe, ces scores étant associés aux différents blocs d'intérêt retenus dans la carte de classification masquée. Ainsi, si la carte de classification masquée contient NM scores, M étant le nombre de blocs d'intérêt identifiés par le masque binaire, alors le score agrégé pour la classe d'indice i résulte de l'agrégation des M scores $p_i$ respectivement associés aux M blocs d'intérêts. Comme on a N classes, N scores agrégés sont produits lors de cette étape 114.

Une agrégation particulièrement peu coûteuse en ressources matérielles consiste simplement à sommer les M scores $p_i$ respectivement associés aux M blocs d'intérêts pour obtenir le score agrégé de la classe d'indice i. D'autres types d'agrégation pourraient cependant être réalisés à la place d'une sommation à l'étape 114.

Dans l'étape 116, le processeur 10 détecte au moins un score constituant un maximum local de l'histogramme. Chaque classe d'intérêt est une classe associée à un score constituant un maximum local détecté.

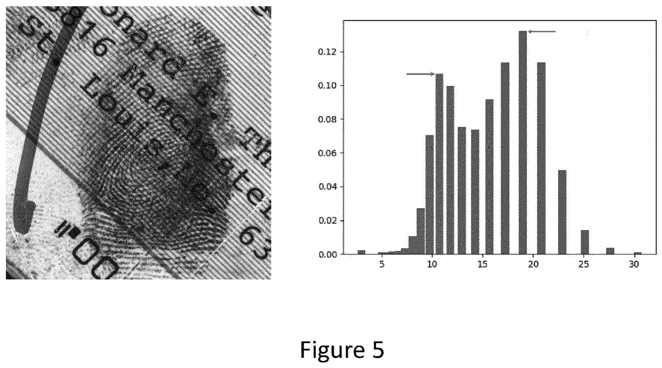

Il est à remarquer que l'histogramme calculé à l'étape 114 peut comprendre un seul maximum local ou plusieurs maximas locaux. Par exemple, la figure 5 montre à gauche un autre exemple d'image d'épreuve comprenant des signaux parasites (lignes obliques), et montre à droite l'histogramme obtenu à partir de cette image d'épreuve. Cet histogramme comprend deux maximas locaux : un maximum local principal de valeur élevée (supérieure à 0.12) associé à une classe d'intérêt dont les valeurs sont légèrement inférieures à 20 pixels, et un maximum local secondaire de valeur moindre (entre 0.10 et 0.12) associé à une autre classe dont les valeurs sont légèrement supérieures à 10 pixels.

A des fins de clarté, on va dans un premier temps supposer qu'il est détecté à l'étape 116 un seul maximum local, et par conséquent que le processeur ne sélectionne qu'une seule classe d'intérêt dans la pluralité de N classes de distance en pixels.

Dans une étape 118, le processeur 10 estime une distance inter-crêtes moyenne de l'empreinte digitale d'épreuve à partir de la carte de distances inter-crêtes locales et la classe d'intérêt sélectionnée. L'estimation 118 comprend les sous-étapes suivantes.

On rappelle que la carte de distances inter-crêtes locales comprend M distances inter-crêtes locales en pixels respectivement associées aux M blocs d'intérêt préalablement retenus dans la carte de classification masquée.

Dans une première sous-étape de l'étape 118, le processeur 10 sélectionne des distances d'intérêt parmi les M distances inter-crêtes locales en pixels respectivement associées aux M blocs d'intérêt, en se fondant sur un critère de proximité avec la classe d'intérêt. Une distance inter-crêtes locale dont la valeur est proche des valeurs de la classe d'intérêt est ici sélectionnée. Par contraste, une distance inter-crêtes locale dont la valeur est éloignée des valeurs de la classe d'intérêt n'est pas sélectionnée.

De préférence, les distances d'intérêt sont les distances inter-crêtes locales en pixels ayant des valeurs comprises dans un intervalle dont les bornes sont déterminées à partir d'une valeur de distance incluse dans la classe d'intérêt.

Par exemple, l'intervalle est centré sur la valeur médiane de la classe d'intérêt, et a une longueur prédéfinie. En variante, la borne inférieure est égale (100 - x) % de la valeur médiane de la classe d'intérêt, et la borne supérieure de l'intervalle est égal à (100 + x) % de la valeur médiane de la classe d'intérêt, avec x compris entre 0 et 100, par exemple 35.

Quelle que soit la méthode de construction de l'intervalle, l'intervalle représente un voisinage borné autour d'une valeur issue de la classe d'intérêt.

Dans une autre sous-étape, le processeur calcule une moyenne entre les distances d'intérêt sélectionnées à la sous-étape précédente.

Le résultat de ce calcul de moyenne est la distance inter-crêtes moyenne en pixels estimée pour l'empreinte digitale d'épreuve.

Cette distance inter-crêtes moyenne en pixels estimée est obtenue sans requérir la connaissance préalable de la résolution de l'image d'épreuve. En effet, aucune des étapes 102, 104, 106, 108, 110, 112, 114, 116, 118 n'a utilisé une telle résolution comme paramètre ; le procédé a exclusivement travaillé sur des distances exprimées en pixels.

Il est possible que les images de références stockées par le serveur aient une résolution différente de la résolution de l'image d'épreuve (cette dernière étant inconnue). Dans cette éventualité, comparer l'image d'épreuve avec les images de références serait susceptible de conduire à des détections manquées ou des faux positifs.

Pour surmonter ce problème, le dispositif 1 obtient dans une étape 120 une distance inter-crêtes de référence, exprimée en pixels, se rapportant à une empreinte digitale de référence montrée dans une image de référence stockées dans la base de données.

Pour obtenir cette distance inter-crêtes moyenne à l'étape 120, le dispositif 1 de traitement peut envoyer une requête au serveur 2 via son interface de communication 12, et le serveur 2 retourner la distance inter-crêtes de référence en pixels en réponse à la requête.

Par exemple, la distance inter-crêtes de référence en pixels est calculée à l'avance, c'est-à-dire avant l'envoi de la requête visant à l'obtenir, par exemple lors de l'enrôlement de l'image de référence auprès du serveur 2. En variante, le serveur 2 peut estimer cette distance inter-crêtes de référence sur réception de la requête, par exemple au moyen des étapes 104 à 118 appliquées à une image de référence stockée par le serveur 2.

Dans une étape 122, le dispositif 1 de traitement redimensionne l'image d'épreuve en une image redimensionnée, de sorte que la distance inter-crêtes d'épreuve moyenne en pixels estimée corresponde à la distance inter-crêtes de référence en pixels. Ce redimensionnement est typiquement une mise à l'échelle, c'est-à-dire sans une transformation ne changeant pas le ratio d'aspect de l'image d'épreuve.

L'étape de dimensionnement 122 peut ainsi comprendre le calcul d'un facteur d'échelle comme un rapport de la distance inter-crêtes de référence en pixels à la distance inter-crêtes moyenne en pixels estimée pour l'image d'épreuve, et appliquer ce facteur d'échelle à l'image d'épreuve pour obtenir l'image redimensionnée.

Par exemple, supposons que la distance inter-crêtes moyenne estimée pour l'image d'épreuve est égale à 5 pixels, et que la distance inter-crêtes de référence obtenue est égale à 10 pixels. Dans ce cas, l'image d'épreuve est redimensionnée de sorte que la distance inter-crêtes de l'image d'épreuve passe de 5 pixels à 10 pixels dans l'image redimensionnée, en utilisant un facteur de redimensionnement égal à 2 (10 divisé par 5).

Dans une étape 124, le processeur 10 commande une comparaison entre l'image d'épreuve redimensionnée et l'image de référence, de sorte à vérifier une correspondance entre l'empreinte digitale d'épreuve et l'empreinte digitale de référence.

La comparaison, connue de l'état de la technique, est typiquement réalisée par le serveur 2. Pour commander cette comparaison, le dispositif 1 de traitement peut envoyer au serveur 2 une requête de comparaison et l'image redimensionnée. L'image redimensionnée peut par exemple être envoyée au serveur sous forme chiffré pour plus de confidentialité.

On va vu précédemment que le processeur 10 peut dans certains cas sélectionner non pas une mais plusieurs classes d'intérêt (notamment si plusieurs maximas locaux sont détectés dans l'histogramme à l'étape 116). Ceci peut survenir dans des images d'épreuve comprenant des fréquences spatiales multiples, et dans lesquelles l'empreinte d'épreuve se confond avec d'autres signaux périodiques, comme par exemple dans l'exemple de la figure 5 discutée précédemment. Dans ce cas, l'étape 118 est répétée pour chaque classe d'intérêt, de sorte à produire plusieurs distances moyennes en pixels respectivement associées aux classes d'intérêt.

Par ailleurs, les étapes 122 et 124 sont mises en œuvre d'abord sur la base de la distance moyenne en pixels associée à la classe d'intérêt pour laquelle on a trouvé un maximum local ayant la valeur la plus élevée parmi les maximas locaux détectés. S'il est constaté que l'image redimensionnée et l'image d'épreuve ne correspondent pas, alors les étapes 122 et 124 sont à nouveau mises en œuvre sur la base d'une autre distance moyenne. Ainsi, les différents maximas locaux sont successivement testés par ordre de probabilité décroissante.

On a vu précédemment que les N classes ont des tailles croissantes avec leur médiane. Ceci est avantageux, car on dispose de plus de précision pour les faibles distances inter-crête, qui sont plus sensibles aux faibles erreurs absolues (par exemple commettre une erreur de 1 est plus grave pour une distance attendue de 3 que pour une distance attendue de 20).

On a également vu précédemment que le réseau de neurones d'extraction était de préférence dépourvu de couche de normalisation. Les inventeurs ont découvert que la présence de couches de normalisation dans le réseau de neurones d'extraction entraîne des biais dans l'estimation de distance moyenne en pixels, surtout lorsque l'empreinte digitale d'épreuve repose sur un fond bruyant. En effet, des textures apparaissant dans l'image d'épreuve autour de l'empreinte digitale d'épreuve peuvent perturber le bon fonctionnement du réseau sur les zones d'empreintes et aboutir à une distance moyenne incorrecte (surestimée ou sous-estimée de manière excessive).

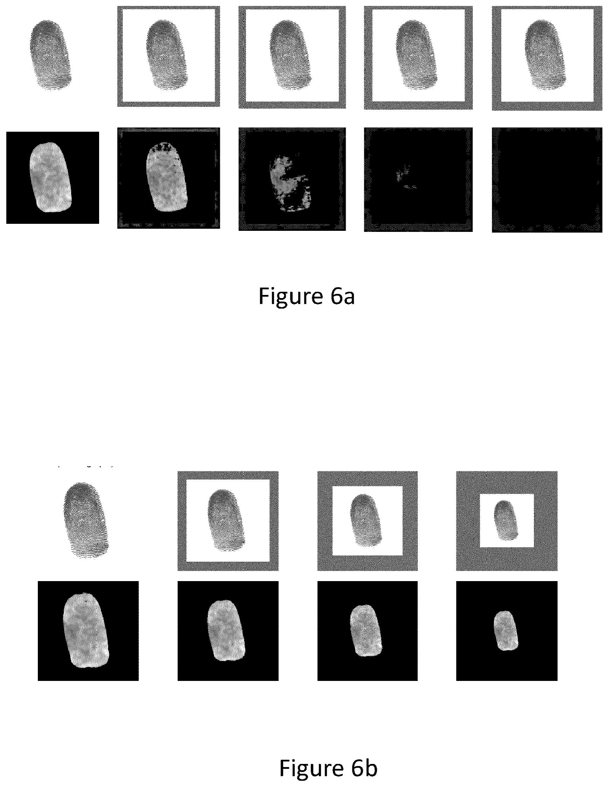

Pour confirmer cette découverte, des tests comparatifs ont été réalisés, consistant à mettre en œuvre le procédé avec une couche de normalisation de type « batch », en ajoutant un rembourrage (« padding ») progressif de bruit aléatoire sur des empreintes très visibles (de type « tenprint »). La figure 6a montre une série de résultats obtenus avec la couche de normalisation, et la figure 6b une série de résultats obtenus sans couche de normalisation pour une même empreinte. Les images sur fond blanc, et avec bordure grise le cas échéant, sont les images d'épreuve passées en entrée, et les images sur fond noir sont les cartes de distances locales correspondantes obtenues. Sur les figures 6a et 6b, le rembourrage correspond à la bordure grise autour du carré blanc contenant l'empreinte digitale d'épreuve. On constate que l'absence de couche de normalisation permet d'obtenir des cartes de distances locales beaucoup plus résistantes au bruit injecté.

Par ailleurs, pour mesurer la valeur ajoutée de l'étape de redimensionnement, les inventeurs ont réalisé des tests comparatifs consistant à mettre en œuvre des comparaisons entre image d'épreuve et image de référence (étape 124) avec et sans redimensionnement préalable de l'image d'épreuve. Il a ensuite été vérifié dans quelle mesure les résultats de comparaison étaient erronés ou pas (faux positif ou correspondance manquée). Il a été constaté un gain de précision d'environ 14 points lorsque le redimensionnement est mis en œuvre avant comparaison. Dans certains cas, l'erreur passe de 17% à 2.2%, ce qui représente presque 8 fois moins d'erreur.

## Revendications

1. Procédé de traitement d'une image d'épreuve montrant une empreinte digitale d'épreuve, le procédé comprenant les étapes suivantes mises en œuvre par ordinateur :

  • génération (110) d'une carte de classification issue de l'image d'épreuve, la carte de classification comprenant, pour chaque bloc faisant partie d'une pluralité de blocs de l'image d'épreuve et pour chaque classe d'une pluralité de classes de distances en pixels, un score associé au bloc et à la classe, le score associé au bloc et à la classe étant indicatif d'une probabilité d'existence dans l'image d'épreuve d'un segment passant par le bloc et dont la longueur en pixels constitue une distance inter-crêtes de l'empreinte digitale incluse dans la classe,
• génération (112) d'une carte de distances inter-crêtes locales à partir de la carte de classification, la carte de distances inter-crêtes locales comprenant, pour chaque bloc de la pluralité de blocs, une distance inter-crêtes locale en pixels estimée pour le bloc,
• estimation (118) d'une distance inter-crêtes moyenne en pixels de l'empreinte digitale d'épreuve à partir de la carte de distances inter-crêtes locales et d'une classe d'intérêt faisant partie de la pluralité de classes de distance en pixels, l'estimation (118) comprenant une sélection, dans la carte de distances inter-crêtes locales, de distances inter-crêtes locales d'intérêt selon un critère de proximité avec la classe d'intérêt, et un calcul d'une moyenne entre les distances inter-crêtes locales d'intérêt.

2. Procédé selon la revendication précédente, dans lequel la distance inter-crêtes locale en pixels estimée pour un bloc est calculée à partir de :

• un premier score ($p_k$) indicatif d'une probabilité d'existence maximale parmi les scores associés au bloc, le premier score étant associé à une première classe faisant partie de la pluralité de classes de distances,
• une première valeur de distance en pixels ($C_k$) incluse dans la première classe.

3. Procédé selon la revendication précédente, dans lequel la distance inter-crêtes locale en pixels estimée pour un bloc est calculée à partir de :

• un deuxième score ($p_{k-1}$) associé à une deuxième classe, la deuxième classe étant adjacente à la première classe dans la pluralité de classes de distances en pixels,
• une deuxième valeur de distance en pixels ($C_{k-1}$) incluse dans la deuxième classe.

4. Procédé selon la revendication précédente, dans lequel la distance inter-crêtes locale en pixels estimée pour un bloc est calculée à partir de :

• un troisième score ($p_{k+1}$) associé à une troisième classe, la troisième classe étant adjacente à la première classe dans la pluralité de classes de distances en pixels, et la troisième classe étant distincte de la deuxième classe,
• une troisième valeur de distance en pixels ($C_{k+1}$) incluse dans la troisième classe.

5. Procédé selon la revendication précédente, dans lequel la distance inter-crêtes locale en pixels estimée pour un bloc est calculée comme une moyenne de la première valeur de distance, de la deuxième valeur de distance et de la troisième valeur de distance, respectivement pondérées par le premier score, le deuxième score et le troisième score.

6. Procédé selon l'une quelconque des revendications précédentes, comprenant en outre des étapes de :

• génération (106) d'une carte de classification préliminaire issue de l'image d'épreuve, la carte de classification préliminaire comprenant, pour chaque bloc d'un ensemble de blocs couvrant toute l'image d'épreuve et pour chaque classe de la pluralité de classes de distances en pixels, un score préliminaire associé au bloc et à la classe, le score préliminaire associé au bloc et à la classe étant indicatif d'une probabilité d'existence dans l'image d'épreuve d'un segment passant par le bloc et dont la longueur en pixels constitue une distance inter-crêtes de l'empreinte digitale incluse dans la classe,
• à partir de l'image d'épreuve, génération (108) d'un masque binaire estimant, pour chaque bloc de l'ensemble de blocs, si le bloc montre ou non une empreinte digitale,
• application (110) du masque binaire à la carte de classification préliminaire de sorte à générer la carte de classification, la pluralité de blocs étant restreinte à chaque bloc que le masque binaire estime montrer une empreinte digitale.

7. Procédé selon la revendication précédente, dans lequel la génération de la carte de classification préliminaire est mise en œuvre par un premier réseau de neurones, et la génération du masque binaire est mise en œuvre par un deuxième réseau de neurones fonctionnant en parallèle du premier réseau de neurones.

8. Procédé selon l'une quelconque des revendications 6 et 7, dans lequel l'application (110) du masque binaire à la carte de classification préliminaire comprend un produit de Hadamard entre la carte de classification préliminaire et le masque binaire.

9. Procédé selon l'une quelconque des revendications précédentes, comprenant en outre une extraction (104) de caractéristiques de l'image d'épreuve par un réseau de neurones dépourvu de couche de normalisation, la carte de classification étant issue des caractéristiques extraites.

10. Procédé selon l'une quelconque des revendications précédentes, dans lequel les distances inter-crêtes locales d'intérêt sélectionnées selon le critère de proximité avec la classe d'intérêt sont des distances inter-crêtes locales comprises dans un intervalle ayant des bornes déterminées à partir d'une valeur de distance incluse dans la classe de référence, l'intervalle formant un voisinage autour de la valeur de distance.

11. Procédé selon la revendication précédente, comprenant des étapes de

• calcul (114) d'un histogramme à partir de la carte de classification, l'histogramme comprenant, pour chaque classe faisant partie de la pluralité de classes de distances en pixels, un score agrégé obtenu par agrégation des scores associés à la classe,
• détection (116) d'au moins un maximum local de l'histogramme, la classe d'intérêt étant associée à un maximum local détecté dans l'histogramme.

12. Procédé selon la revendication précédente, dans lequel :

• il est détecté (116) dans l'histogramme une pluralité de maximas locaux, chaque maximum local étant associé à une classe d'intérêt faisant partie de la pluralité de classes de distances en pixels,
• l'étape d'estimation (118) est mise en œuvre pour chaque classe d'intérêt, de sorte à produire une pluralité de distance inter-crêtes moyenne en pixels.

13. Procédé selon l'une quelconque des revendications précédentes, comprenant en outre des étapes de :

• obtention (120) d'une distance inter-crêtes de référence en pixels se rapportant à une empreinte digitale de référence montrée dans une image de référence,
• redimensionnement (122) de l'image d'épreuve en une image d'épreuve redimensionnée de sorte que la distance inter-crêtes moyenne en pixels corresponde à la distance inter-crêtes de référence,
• commande (124) de comparaison entre l'image d'épreuve redimensionnée et l'image de référence, de sorte à vérifier une correspondance entre l'empreinte digitale d'épreuve et l'empreinte digitale de référence.

14. Procédé selon la revendication précédente en combinaison avec la revendication 12, dans lequel :

• La pluralité de maxima locaux comprend un maximum local principal et un maximum local secondaire inférieur au maximum local principal,
• la pluralité de distances inter-crêtes moyennes en pixels comprend :

• une distance principale calculée à partir du maximum local principale,
• une distance secondaire calculée à partir du maximum local secondaire,

le procédé comprenant en outre :

• une première mise en œuvre des étapes de redimensionnement et de commande de comparaison à partir de la distance principale, et
• après la première mise en œuvre, une deuxième mise en œuvre des étapes de redimensionnement et de commande de comparaison à partir de la distance secondaire en lieu et place de la distance principale, de préférence à condition que la première mise en œuvre ait abouti à un résultat indiquant l'empreinte digitale d'épreuve et l'empreinte digitale de référence ne correspondant pas.

15. Procédé selon l'une quelconque des revendications précédentes, dans lequel chaque bloc est un pixel de l'image.

16. Procédé selon l'une quelconque des revendications précédentes, dans lequel la pluralité de classe de distances respecte la règle suivante : plus une classe de la pluralité de classes de distances a une valeur médiane élevée, plus la classe a une taille élevée.

17. Produit programme d'ordinateur comprenant des instructions de code de programme pour l'exécution des étapes du procédé selon l'une quelconque des revendications précédentes, lorsque ce programme est exécuté par un ordinateur.

18. Mémoire lisible par ordinateur stockant des instructions exécutables par l'ordinateur pour l'exécution des étapes du procédé selon l'une quelconque des revendications 1 à 16.

**Patentansprüche**

1. Verfahren zum Verarbeiten eines Prüfbildes, das einen Fingerabdruck zeigt, wobei das Verfahren die folgenden rechnerimplementierten Schritte umfasst:

   o Erzeugen (110) einer Klassifizierungskarte aus dem Prüfbild, wobei die Klassifizierungskarte für jeden Block einer Vielzahl von Blöcken des Prüfbildes und für jede Klasse einer Vielzahl von Pixelabstandsklassen einen mit dem Block und der Klasse assoziierten Wert (Score) umfasst, wobei der Wert eine Wahrscheinlichkeit für das Vorhandensein eines Segments im Prüfbild angibt, das durch den Block verläuft und dessen Länge in Pixeln einen Kammabstand des Fingerabdrucks bildet, der in der Klasse enthalten ist;
   o Erzeugen (112) einer lokalen Kammabstandskarte aus der Klassifizierungskarte, wobei die lokale Kammabstandskarte für jeden Block der Vielzahl von Blöcken einen für den Block geschätzten lokalen Kammabstand in Pixeln umfasst;
   o Schätzen (118) eines mittleren Kammabstands in Pixeln des Prüf-Fingerabdrucks aus der lokalen Kammabstandskarte und einer interessierenden Klasse aus der Vielzahl von Pixelabstandsklassen, wobei das Schätzen (118) das Auswählen von lokalen Kammabständen von Interesse in der lokalen Kammabstandskarte gemäß einem Nähe-Kriterium zur interessierenden Klasse und das Berechnen eines Mittelwerts der lokalen Kammabstände von Interesse umfasst.

2. Verfahren nach Anspruch 1, wobei der für einen Block geschätzte lokale Kammabstand in Pixeln berechnet wird aus:

   o einem ersten Wert (pk), der eine maximale Wahrscheinlichkeit unter den mit dem Block assoziierten Werten angibt, wobei der erste Wert einer ersten Klasse aus der Vielzahl von Abstandsklassen zugeordnet ist;
   o einem ersten Pixelabstandswert (Ck), der in der ersten Klasse enthalten ist.

3. Verfahren nach Anspruch 2, wobei der für einen Block geschätzte lokale Kammabstand in Pixeln berechnet wird aus:

   o einem zweiten Wert (pk-1), der einer zweiten Klasse zugeordnet ist, wobei die zweite Klasse an die erste Klasse in der Vielzahl von Pixelabstandsklassen angrenzt;
   o einem zweiten Pixelabstandswert (Ck-1), der in der zweiten Klasse enthalten ist.

4. Verfahren nach Anspruch 3, wobei der für einen Block geschätzte lokale Kammabstand in Pixeln berechnet wird aus:

   o einem dritten Wert (pk+1), der einer dritten Klasse zugeordnet ist, wobei die dritte Klasse an die erste Klasse in der Vielzahl von Pixelabstandsklassen angrenzt und sich von der zweiten Klasse unterscheidet;
   o einem dritten Pixelabstandswert (Ck+1), der in der dritten Klasse enthalten ist.

5. Verfahren nach Anspruch 4, wobei der für einen Block geschätzte lokale Kammabstand in Pixeln als gewichteter Mittelwert des ersten, zweiten und dritten Abstandswerts berechnet wird, jeweils gewichtet mit dem ersten, zweiten und dritten Wert.

6. Verfahren nach einem der vorhergehenden Ansprüche, weiterhin umfassend die Schritte:

   ◦ Erzeugen (106) einer vorläufigen Klassifizierungskarte aus dem Prüfbild, wobei die vorläufige Klassifizierungskarte für jeden Block einer Menge von Blöcken, die das gesamte Prüfbild abdecken, und für jede Klasse der Vielzahl von Pixelabstandsklassen einen vorläufigen Wert (Score) umfasst, der eine Wahrscheinlichkeit für das Vorhandensein eines Segments im Prüfbild angibt, das durch den Block verläuft und dessen Länge in Pixeln einen Kammabstand des Fingerabdrucks bildet, der in der Klasse enthalten ist;
   ◦ Erzeugen (108) einer binären Maske aus dem Prüfbild, die für jeden Block der Menge von Blöcken schätzt, ob der Block einen Fingerabdruck zeigt oder nicht;
   ◦ Anwenden (110) der binären Maske auf die vorläufige Klassifizierungskarte, um die Klassifizierungskarte zu erzeugen, wobei die Vielzahl von Blöcken auf diejenigen Blöcke beschränkt wird, bei denen die binäre Maske das Vorhandensein eines Fingerabdrucks schätzt.

7. Verfahren nach Anspruch 6, wobei das Erzeugen der vorläufigen Klassifizierungskarte durch ein erstes neuronales Netzwerk und das Erzeugen der binären Maske durch ein zweites neuronales Netzwerk erfolgt, das parallel zum ersten neuronalen Netzwerk arbeitet.

8. Verfahren nach Anspruch 6 oder 7, wobei das Anwenden (110) der binären Maske auf die vorläufige Klassifizierungskarte ein Hadamard-Produkt zwischen der vorläufigen Klassifizierungskarte und der binären Maske umfasst.

9. Verfahren nach einem der vorhergehenden Ansprüche, weiterhin umfassend das Extrahieren (104) von Merkmalen aus dem Prüfbild durch ein neuronales Netzwerk ohne Normalisierungsschicht, wobei die Klassifizierungskarte aus den extrahierten Merkmalen abgeleitet wird.

10. Verfahren nach einem der vorhergehenden Ansprüche, wobei die gemäß dem Nähe-Kriterium zur interessierenden Klasse ausgewählten lokalen Kammabstände von Interesse lokale Kammabstände sind, die in einem Intervall liegen, dessen Grenzen aus einem in der Referenzklasse enthaltenen Abstandswert bestimmt werden, wobei das Intervall eine Nachbarschaft um den Abstandswert bildet.

11. Verfahren nach Anspruch 10, umfassend die Schritte:

   ∘ Berechnen (114) eines Histogramms aus der Klassifizierungskarte, wobei das Histogramm für jede Klasse der Vielzahl von Pixelabstandsklassen einen aggregierten Wert umfasst, der durch Aggregation der mit der Klasse assoziierten Werte erhalten wird;
   ∘ Erkennen (116) von mindestens einem lokalen Maximum des Histogramms, wobei die interessierende Klasse einem im Histogramm erkannten lokalen Maximum zugeordnet ist.

12. Verfahren nach Anspruch 11, wobei:

   ∘ im Histogramm eine Vielzahl von lokalen Maxima erkannt (116) wird, wobei jedes lokale Maximum einer interessierenden Klasse aus der Vielzahl von Pixelabstandsklassen zugeordnet ist;
   ∘ der Schätzschritt (118) für jede interessierende Klasse durchgeführt wird, um eine Vielzahl von mittleren Kammabständen in Pixeln zu erzeugen.

13. Verfahren nach einem der vorhergehenden Ansprüche, weiterhin umfassend die Schritte:

   ∘ Erhalten (120) eines Referenz-Kammabstands in Pixeln, der sich auf einen in einem Referenzbild gezeigten Referenz-Fingerabdruck bezieht;
   ∘ Skalieren (122) des Prüfbildes zu einem skalierten Prüfbild, so dass der mittlere Kammabstand in Pixeln dem Referenz-Kammabstand entspricht;
   ∘ Auslösen (124) eines Vergleichs zwischen dem skalierten Prüfbild und dem Referenzbild, um eine Übereinstimmung zwischen dem Prüf-Fingerabdruck und dem Referenz-Fingerabdruck zu überprüfen.

14. Verfahren nach Anspruch 13 in Kombination mit Anspruch 12, wobei:

   ∘ die Vielzahl von lokalen Maxima ein Hauptmaximum und ein Nebenmaximum umfasst, wobei das Nebenmaximum kleiner als das Hauptmaximum ist;
   ∘ die Vielzahl von mittleren Kammabständen in Pixeln umfasst:

      ▪ einen Hauptabstand, berechnet aus dem Hauptmaximum,
      ▪ einen Nebenabstand, berechnet aus dem Nebenmaximum,

   ∘ das Verfahren weiterhin umfasst:

      ▪ eine erste Durchführung der Skalierungs- und Vergleichsschritte auf Basis des Hauptabstands und
      ▪ nach der ersten Durchführung eine zweite Durchführung der Skalierungs- und Vergleichsschritte auf Basis des Nebenabstands anstelle des Hauptabstands, vorzugsweise sofern die erste Durchführung zu dem Ergebnis geführt hat, dass der Prüf-Fingerabdruck und der Referenz-Fingerabdruck nicht übereinstimmen.

**15.** Verfahren nach einem der vorhergehenden Ansprüche, wobei jeder Block ein Pixel des Bildes ist.

**16.** Verfahren nach einem der vorhergehenden Ansprüche, wobei die Vielzahl von Abstandsklassen der Regel folgt, dass eine Klasse mit höherem Medianwert eine größere Klassengröße aufweist.

**17.** Computerprogrammprodukt, umfassend Programmcode-Anweisungen zur Ausführung der Schritte des Verfahrens nach einem der vorhergehenden Ansprüche, wenn das Programm von einem Computer ausgeführt wird.

**18.** Computerlesbarer Speicher, der Anweisungen speichert, die von einem Computer ausführbar sind, um die Schritte des Verfahrens nach einem der Ansprüche 1 bis 16 auszuführen.

**Claims**

**1.** A method for processing a test image showing a test fingerprint, the method comprising the following computer-implemented steps:

  o generating (110) a classification map from the test image, the classification map comprising, for each block among a plurality of blocks of the test image and for each class among a plurality of pixel distance classes, a score associated with the block and the class, the score being indicative of a probability of existence, in the test image, of a segment passing through the block and whose length in pixels constitutes a ridge-to-ridge distance of the fingerprint included in the class;
  o generating (112) a local ridge-to-ridge distance map from the classification map, the local ridge-to-ridge distance map comprising, for each block of the plurality of blocks, a local ridge-to-ridge distance in pixels estimated for the block;
  o estimating (118) an average ridge-to-ridge distance in pixels of the test fingerprint from the local ridge-to-ridge distance map and a class of interest among the plurality of pixel distance classes, the estimation (118) comprising selecting, in the local ridge-to-ridge distance map, local ridge-to-ridge distances of interest according to a proximity criterion with the class of interest, and calculating an average among the local ridge-to-ridge distances of interest.

**2.** The method according to claim 1, wherein the local ridge-to-ridge distance in pixels estimated for a block is calculated from:

  o a first score (pk) indicative of a maximum probability of existence among the scores associated with the block, the first score being associated with a first class among the plurality of distance classes;
  o a first pixel distance value (Ck) included in the first class.

**3.** The method according to claim 2, wherein the local ridge-to-ridge distance in pixels estimated for a block is calculated from:

  o a second score (pk-1) associated with a second class, the second class being adjacent to the first class among the plurality of pixel distance classes;
  o a second pixel distance value (Ck-1) included in the second class.

**4.** The method according to claim 3, wherein the local ridge-to-ridge distance in pixels estimated for a block is calculated from:

  o a third score (pk+1) associated with a third class, the third class being adjacent to the first class among the plurality of pixel distance classes and distinct from the second class;
  o a third pixel distance value (Ck+1) included in the third class.

**5.** The method according to claim 4, wherein the local ridge-to-ridge distance in pixels estimated for a block is calculated as a weighted average of the first, second, and third distance values, respectively weighted by the first, second, and third scores.

**6.** The method according to any one of the preceding claims, further comprising the steps of:

o generating (106) a preliminary classification map from the test image, the preliminary classification map comprising, for each block of a set of blocks covering the entire test image and for each class among the plurality of pixel distance classes, a preliminary score associated with the block and the class, the preliminary score being indicative of a probability of existence, in the test image, of a segment passing through the block and whose length in pixels constitutes a ridge-to-ridge distance of the fingerprint included in the class;

o generating (108), from the test image, a binary mask estimating, for each block of the set of blocks, whether the block shows a fingerprint or not;

o applying (110) the binary mask to the preliminary classification map so as to generate the classification map, the plurality of blocks being restricted to each block that the binary mask estimates as showing a fingerprint.

7. The method according to claim 6, wherein the generation of the preliminary classification map is implemented by a first neural network, and the generation of the binary mask is implemented by a second neural network operating in parallel with the first neural network.

8. The method according to claim 6 or 7, wherein the application (110) of the binary mask to the preliminary classification map comprises a Hadamard product between the preliminary classification map and the binary mask.

9. The method according to any one of the preceding claims, further comprising extracting (104) features from the test image by a neural network without a normalisation layer, the classification map being derived from the extracted features.

10. The method according to any one of the preceding claims, wherein the local ridge-to-ridge distances of interest selected according to the proximity criterion with the class of interest are local ridge-to-ridge distances included in an interval having bounds determined from a distance value included in the reference class, the interval forming a neighbourhood around the distance value.

11. The method according to claim 10, comprising the steps of:

   ◦ calculating (114) a histogram from the classification map, the histogram comprising, for each class among the plurality of pixel distance classes, an aggregated score obtained by aggregating the scores associated with the class;
   ◦ detecting (116) at least one local maximum of the histogram, the class of interest being associated with a local maximum detected in the histogram.

12. The method according to claim 11, wherein:

   ◦ a plurality of local maxima are detected (116) in the histogram, each local maximum being associated with a class of interest among the plurality of pixel distance classes;
   ◦ the estimation step (118) is implemented for each class of interest, so as to produce a plurality of average ridge-to-ridge distances in pixels.

13. The method according to any one of the preceding claims, further comprising the steps of:

   ◦ obtaining (120) a reference ridge-to-ridge distance in pixels relating to a reference fingerprint shown in a reference image;
   ◦ resizing (122) the test image into a resized test image so that the average ridge-to-ridge distance in pixels corresponds to the reference ridge-to-ridge distance;
   ◦ commanding (124) a comparison between the resized test image and the reference image, so as to verify a match between the test fingerprint and the reference fingerprint.

14. The method according to claim 13 in combination with claim 12, wherein:

   ◦ the plurality of local maxima comprises a main local maximum and a secondary local maximum lower than the main local maximum;
   ◦ the plurality of average ridge-to-ridge distances in pixels comprises:

      ▪ a main distance calculated from the main local maximum,
      ▪ a secondary distance calculated from the secondary local maximum,

    ◦ the method further comprising:

> - a first implementation of the resizing and comparison steps based on the main distance, and
> - after the first implementation, a second implementation of the resizing and comparison steps based on the secondary distance instead of the main distance, preferably provided that the first implementation resulted in a finding that the test fingerprint and the reference fingerprint do not match.

15. The method according to any one of the preceding claims, wherein each block is a pixel of the image.

16. The method according to any one of the preceding claims, wherein the plurality of distance classes follows the rule that the higher the median value of a class among the plurality of distance classes, the larger the size of the class.

17. A computer program product comprising program code instructions for executing the steps of the method according to any one of the preceding claims, when said program is executed by a computer.

18. A computer-readable memory storing instructions executable by a computer for executing the steps of the method according to any one of claims 1 to 16.

Figure 1

Figure 2

Figure 3

Figure 4

Figure 5

Figure 6a

Figure 6b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Fingerprint Scaling. **CHUN-XIAO REN et al.** Tapies in Cryptology- CT-RSA 2020 : The Cryptographers Track at the RSA Conference 2020, San Francisco, CA, USA. Cornell University Library, Ithaca, 15 September 2008, 474-481